# EUROPÄISCHE PATENTANMELDUNG

(11) **EP 1 714 946 A2**
(43) Veröffentlichungstag der Anmeldung: **25.10.2006**
(21) Anmeldenummer: 06007476.2
(22) Anmeldetag: 10.04.2006
(51) Int. Cl.: C02F 3/00, C02F 9/00, C02F 1/78, C02F 101/30, C02F 103/30

(54) **Vorrichtung und Verfahren zum biologischen Aufbereiten von Abwasser**

(30) Priorität: 18.04.2005 DE 102005017948
(71) Anmelder: Ecker Ingenieurgesellschaft mbh, 52349 Düren (DE)
(72) Erfinder: Ecker, Robert, Dipl.-Ing., 52391 Vettweiss (DE); Pickert, Dr., 14089 Berlin (DE)
(74) Vertreter: Patentanwaltskanzlei Liermann-Castell

(57) **Zusammenfassung**

Um bekannte Vorrichtungen zum biologischen Aufbereiten von Abwasser weiter zu entwickeln, schlägt die Erfindung eine Vorrichtung zum biologischen Aufbereiten von Abwasser mit wenigstens einem Abwasserzulauf zum Einleiten des Abwassers in die Aufbereitungsvorrichtung und mit wenigstens einem Recyclingwasserablauf zum Bereitstellen des Recyclingwassers an der Aufbereitungsvorrichtung vor, wobei die Aufbereitungsvorrichtung dauerhaft in wenigstens einem mobilen Container angeordnet ist.

## Beschreibung

Die Erfindung betrifft zum einen eine Vorrichtung zum biologischen Aufbereiten von Abwassern mit wenigstens einem Abwasserzulauf zum Einleiten des Abwassers in die Aufbereitungsvorrichtung und mit wenigstens einem Recyclingwasserablauf zum Bereitstellen eines Recyclingwassers. Darüber hinaus betrifft die Erfindung ein Verfahren zum biologischen Aufbereiten von Abwasser, bei welchem das Abwasser zum Aufbereiten einem Bio-Reaktor zugeführt wird.

Gattungsgemäße Vorrichtungen und Verfahren sind aus dem Stand der Technik bereits bekannt. Beispielsweise sind in der Offenlegungsschrift DE 199 05 300 A1 ein Verfahren und eine Vorrichtung zur Reinigung und Wiederverwendung insbesondere von tensidhaltigen Abwässern aus Waschprozessen beschrieben, bei welchem ein tensidhaltiges Abwasser einem ersten Bio-Reaktor zugeführt wird, der eine erste tensidabwasserspezifische Mischbiozönose zur biologischen Aufbereitung des Abwassers aufweist, und bei dem das den ersten Bio-Reaktor verlassende Wasser einem zweiten Bio-Reaktor mit einer zweiten tensidabwasserspezifischen Mischbiozönose zugeführt wird. Vorrichtungstechnisch wird dieses Verfahren umgesetzt, indem dem ersten Bio-Reaktor ein zweiter Bio-Reaktor nachgeschaltet ist. Durch diese Verfahrensführung kann der eigentliche Waschprozess beschleunigt werden, da kürzere Verweilzeiten der wiederaufzubereitenden tensidhaltigen Abwässer in den einzelnen Bio-Reaktoren erzielbar seien.

Ein weiteres Verfahren zum Aufbereiten von Abwässer ist in der Patentschrift DE 44 07 734 C1 beschrieben. Auch dieses Verfahren eignet sich zur Reinigung und Wiederverwendung von tensidhaltigen Abwässern. Hierbei wird das den Waschprozess verlassende Wasser nach Abtrennung von Sink- und Schwebstoffen einem Sammelbehälter zugeführt und anschließend einem unter aeroben Bedingungen arbeitenden Reaktor zugeführt. Das den Bio-Reaktor verlassende Wasser wird wiederum einem Absorber zugeführt, wobei das biologisch und physikalisch gereinigte Wasser dann letztendlich wieder dem Waschprozess als Speisewasser zugeführt wird. Auch dieses Verfahren eignet sich dazu, tensidhaltige Abwässer schnell und kostengünstig aufzubereiten.

Darüber hinaus ist in der Patentschrift DE 199 37 989 B4 eine mobile Entsorgungsanlage beschrieben, jedoch handelt es sich hierbei um eine rein mechanische Behandlung von mit Öl verunreinigten Abwässern und nicht um ein biologisches Reinigungsverfahren, dessen Hauptzielsetzung im Abbau organischer Verbindungen liegt. Dementsprechend verzichtet die hier beschriebene mobile Entsorgungsanlage zu Gunsten der Mobilität auf Bioreaktoren, welche sehr groß bauen und für den mobilen Einsatz auch wenig geeignet sind.

Ebenfalls ist aus der Offenlegungsschrift DE 197 29 680 A1 ein Verfahren zur Abwasserbehandlung bekannt, bei welchem auch Rotationsbioreaktoren als biologische Behandlungsstufen verwendet werden. Die hier beschriebenen Rotationsbioreaktoren sind zwar in einem Container, der als Stahl- oder Betonausführung gefertigt ist, untergebracht, jedoch ist an keiner Stelle der Offenlegungsschrift beschrieben, dass es sich bei dem Container um einen mobilen Container handelt, mit welchem die gesamte Anlage mit geringem Arbeitsaufwand sehr schnell an nahezu beliebigen Orten einsatzbereit aufgestellt werden kann. Vielmehr benötigen die beschriebenen Rotationsbioreaktoren einen Antrieb, der alleine für sich gesehen schon sehr groß baut und wodurch die gesamte Anlage nur sehr aufwändig einsetzbar ist.

In der weiteren Offenlegungsschrift DE 197 23 607 A1 sind ein Verfahren und eine Vorrichtung zur mobilen nassmechanischen Sanierung schadstoffbelasteter Böden, Schlämme und Abwässer beschrieben. Und zwar handelt es sich vorliegend um ein mobiles Verfahren, jedoch ist der Aufbau der Vorrichtung relativ kompliziert, wobei insbesondere das Kernstück der Vorrichtung eine trichterförmig als Pyramide oder Kegel ausgebildete Filterkonstruktion ist, deren Aufbau augenscheinlich ungeeignet ist, in einen mobilen Container integriert zu werden. Somit ist ein schneller Aufbau und ein schneller Abbau sowie eine einfach zu handhabende Transportierung der dort beschriebenen Vorrichtung nicht gegeben.

In der Gebrauchsmusterschrift DE 20 2004 002 159 U1 ist eine Anordnung zur Anhebung eines PH-Wertes in offenen sauren Gewässern beschrieben, bei welcher ein Tank- bzw. Silofahrzeug ein Neutralisationsmittel an das offene Gewässer transportiert und das Neutralisationsmittel in einer offenen Sicherheitsauffangwanne zwischengespeichert wird und das Neutralisationsmittel mittels einer schwimmenden mobilen Lager- und Eintragseinrichtung in das offene saure Gewässer eingebracht wird. Die hier beschriebene Anlage eignet sich zwar gut dazu, ein Neutralisationsmittel in ein offenes Gewässer einzubringen, jedoch ist hier nicht beschrieben, dass Abwasser in einem Bioreaktor aufbereitet wird.

Des Weiteren ist aus dem Gebrauchsmuster DE 259 02 118 U1 eine mobile Anlage zur Behandlung von Abwässern bekannt, bei welcher mittels eines Containers verschiedene Kammern für die Abwasserbehandlung vorgesehen sind und die Kammern nacheinander von dem Abwasser durchflossen werden. Das in einem solchen Container derartige Einrichtung oder Aggregate dauerhaft eingebaut sind, um so einen mobilen Einsatz der mobilen Anlage zu erleichtern, ist dort nicht beschrieben.

In der Übersetzung der europäischen Patentschrift DE 600 11 918 T2 sind eine Vorrichtung und ein Verfahren zu lokalen Behandlung von Wasser beschrieben, mittels welcher bzw. bei welchem unaufbereitetes Wasser mittels eines Erhitzers ausreichend erwärmt wird, um gelöste Verunreinigungen in unaufbereitetem Wasser in feste Niederschläge und Gase umzuwandeln. Die Vorrichtung ist jedoch nicht dafür vorgesehen, mobil eingesetzt zu werden und darüber hinaus tensidhaltige Abwässer biologisch aufzubereiten.

Auch aus der WO 01/32565 A2 ist ein Verfahren zur Reinigung von Abwasser bekannt, bei welchem das Abwasser durch eine biologische Reinigungsstufe und eine Denitrifikationsstufe geführt wird. Hier ist nicht dieser Druckschrift die Rede davon, dass das Verfahren bzw. die für das Verfahren durchzuführende Vorrichtung mobil in einem Container untergebracht ist bzw. untergebracht werden kann.

Im Wesentlichen ist den bekannten Verfahren und die zur Durchführung dieser Verfahren erforderlichen Vorrichtungen jedoch allen gemein, dass sie einen relativ hohen Platzbedarf hinsichtlich des aparativen Aufwands für die entsprechende Reinigungsvorrichtung benötigen. Dies führt insbesondere zu hohen Anschaffungs-, Bereitstellungs-, Unterhalts- und Wartungskosten.

Es ist Aufgabe vorliegender Erfindung den apparativen Aufwand zum Bereitstellen und Durchführen eines derartigen Reinigungsverfahrens zu reduzieren und eine einfach zu transportierende, kompakt bauende Reinigungsvorrichtung zu schaffen.

Die Aufgabe der Erfindung wird von einer Vorrichtung zum biologischen Aufbereiten von Abwasser mit wenigstens einem Abwasserzulauf zum Einleiten des Abwassers in die Aufbereitungsvorrichtung und mit wenigstens einem Recyclingwasserablauf zum Bereitstellen eines Recyclingwassers gelöst, bei welcher die Aufbereitungsvorrichtung dauerhaft in wenigstens einem mobilen Container angeordnet ist.

Erfindungsgemäß wird die gesamte Vorrichtung zum biologischen Aufbereiten von Abwasser in wenigstens einem Container mobil bereit gestellt, sodass der Container beziehungsweise die darin angeordnete Aufbereitungsvorrichtung mit relativ geringem Aufwand, beispielsweise an einer Wäscherei, aufgestellt und bereit gestellt werden kann. Vorteilhafter Weise gehen hierbei weder teuer hergestellte Geschäfts- oder Lagerräume verloren, da die Aufbereitungsvorrichtung vorliegend derart kompakt gebaut ist, dass sie in einem oder gegebenenfalls mehreren mobilen Containern Platz findet. Noch müssen einzelne Aggregate einer herkömmlichen Aufbereitungsvorrichtung in Räume eines Gebäudes aufwändig integriert werden.

Die vorliegende Aufbereitungsvorrichtung in dem mobilen Container hat darüber hinaus den Vorteil, dass sie problemlos wieder entfernt werden kann, sollte sie an einem ersten Einsatzort nicht mehr gebraucht werden. Im Gegensatz zu herkömmlichen Reinigungs- bzw. Aufbereitungsvorrichtungen wird der mobile Container einfach wieder abgeholt, die Aufbereitungsvorrichtung gegebenenfalls gewartet, überholt und an einem anderen Einsatzort wieder bereitgestellt. Dies ist bei herkömmlichen Vorrichtungen nicht möglich, da dieses nach dem Gebrauch in der Regel komplett zerlegt werden müssen, um die Einzelteile beziehungsweise die Bauteilgruppen der Aufbereitungsvorrichtung aus dem Gebäude entfernen zu können. Die Anzahl der erforderlichen Container richtet sich auch nach den Mengen der zu recycelnden Abwassermengen. Beispielsweise können vier oder mehr Container modular zusammen gefügt werden.

Vorteilhafer Weise ist es somit möglich, eine derartige Aufbereitungsvorrichtung für einen Wäschereibetrieb zu leasen und zur gegebenen Zeit der Leasinggesellschaft wieder zurückzugeben. Somit wird mit vorliegender Erfindung ein neues Wirtschaftsgut geschaffen.

Im Gegensatz zu herkömmlichen Aufbereitungsvorrichtungen befinden sich alle erforderlichen Vorrichtungsbauteile wenigstens in einem mobilen Container, sodass die gesamte Vorrichtung im Wesentlichen vormontiert aufgestellt und abgebaut werden kann.

Unter dem Begriff "Abwasser" versteht man jegliche Abwässer, die insbesondere mittels biologischer Aufbereitungsverfahren zumindest teilweise wieder soweit recycelt werden, dass sie für einen weiteren Verfahrensprozess wieder bereit stehen. Hier sind vorliegend insbesondere auch tensidhaltige Abwässer erfasst.

Unter dem Begriff "mobiler Container" versteht man im Sinne der Erfindung jegliche Einrichtungen, die sich dazu eignen, eine Aufbereitungsvorrichtung vollständig oder zumindest vormontierte Bauteilgruppen der Aufbereitungseinrichtung derart aufzunehmen, dass sie ohne großen Montage- beziehungsweise Demontageaufwand bereitgestellt beziehungsweise abgebaut werden kann. Bei dem mobilen Container muss es sich im Sinne der Erfindung nicht zwangsläufig um eine geschlossene Einrichtung handeln. Viel mehr kann der mobile Container auch lediglich aus einer mobilen Plattform bestehen, bei welcher Einrichtungen der Aufbereitungsvorrichtung nicht vollständig von der Umgebung abgeschirmt sind. Um die Aufbereitungsvorrichtung sowie deren Bauteilgruppen jedoch vor Umwelteinflüssen und Beschädigungen besser zu schützen, sieht eine bevorzugte Vorrichtungsvariante einen geschlossenen Container vor. Beispielsweise ist dieser begehbar, sodass Wartung- oder Reparaturarbeiten an einzelnen Bauteilgruppen der Aufbereitungsvorrichtung problemlos vorgenommen werden können, da das Innere des mobilen Containers leicht zugänglich ist.

Eine Ausführungsvariante sieht einen mobilen Verfahrenscontainer vor, in welchem technische Reinigungseinrichtungen, wie etwa Bio-Reaktoren, angeordnet sind.

Um die Bio-Reaktoren in dem mobilen Verfahrenscontainer anordnen zu können, ist es vorteilhaft, wenn die Bio-Reaktoren ein bestimmtes Höhe-Durchmesser-Verhältnis aufweisen. Vorliegend ist wenigstens ein Bio-Reaktor mit einem Verhältnis Höhe zu Durchmesser kleiner gleich 1 vorteilhafter Weise vorgesehen.

Um die Verweilzeiten des aufzubereitenden Abwassers innerhalb der Aufbereitungsvorrichtung günstig zu gestalten, ist es vorteilhaft, wenn die Bio-Reaktoren ein Volumen von mindestens 4 m³, vorzugsweise von mindestens 5 m³, aufweisen.

Besonders vorteilhaft ist es, wenn in dem mobilen Verfahrenscontainer mehr als ein Bio-Reaktor angeordnet ist, vorzugsweise vier oder mehr Bio-Reaktoren, angeordnet sind. Durch eine derart hohe Anzahl an Bio-Reaktoren ist ein schnelles Aufbereiten des Abwassers gewährleistet.

Insbesondere wenn zwei Bio-Reaktoren in Reihe geschaltet sind, handelt es sich bei dem ersten Reaktor um einen vorzugsweise sehr stark durchströmten Reaktor, während der zweite Reaktor vorzugsweise lediglich laminar, das heißt turbulenzfrei, durchströmt wird.

Damit das Abwasser mehrere Aufbereitungs- beziehungsweise Reinigungsstufen der biologischen Aufbereitungsvorrichtung durchläuft, sind vorteilhafter Weise mehr als zwei parallel geschaltete Linien von zwei in Reihe geschalteten Bio-Reaktoren in dem Verfahrenscontainer angeordnet. Somit sind mindestens zwei parallel geschaltete Linien von zwei in Reihe geschalteten Bio-Reaktoren in dem Verfahrenscontainer angeordnet.

Die Aufbereitungsvorrichtung gestaltet sich als besonders kompakt, wenn in dem mobilen Verfahrenscontainer Pumpen, Kiesfilter und/oder Ozoniereinrichtungen angeordnet sind.

Die Pumpen sorgen für ein kontinuierliches Umwälzen des zu reinigenden Abwassers, während beim Wiederaufbereitungsprozess anfallende Biomasse mittels Kiesfilter filtriert wird. Die vorliegend verwendeten Kiesfilter sind vorteilhafter Weise rückspülbar. Mittels der Ozoniereinrichtung wird dem aufbereiteten Wasser O₃ (Ozon) beigegeben.

Um die Recyclingwasserqualität weiter zu erhöhen, ist es vorteilhaft, wenn in dem mobilen Verfahrenscontainer eine Vorreinigungseinrichtung und/oder eine Nachreinigungseinrichtung angeordnet ist. Durch das Anordnen einer Vorreinigungseinrichtung und/oder einer Nachreinigungseinrichtung innerhalb des mobilen Verfahrenscontainers wird die biologische Aufbereitungsvorrichtung zusätzlich kompaktiert, da nun alle wesentlichen Aggregate der biologischen Aufbereitungsvorrichtung zum biologischen Aufbereiten in dem mobilen Container angeordnet sind.

Eine bevorzugte Ausführungsvariante der vorliegenden biologischen Aufbereitungsvorrichtung sieht einen mobilen Speichercontainer vor, in welchem ein Abwasserspeicher und/oder ein Recyclingwasserspeicher angeordnet ist.

Wie der Begriff "Speichercontainer" an sich schon wiederspiegelt, dient der Speichercontainer in erster Linie dazu, in ihm etwas zu speichern beziehungsweise Speichereinrichtungen aufzunehmen.

Hierbei dient der Abwasserspeicher dazu, zu reinigendes Abwasser aufzunehmen und für die Aufbereitungsvorrichtung bereit zu stellen. Der Recyclingwasserspeicher dient dementsprechend dazu, bereits gereinigtes Abwasser zu speichern und beispielsweise für einen erneuten Waschprozess hinsichtlich einer Wäscherei bereit zu stellen.

Weist der Abwasserspeicher und/oder der Recyclingwasserspeicher eine flexible Hülle auf, sind der Abwasserspeicher und der Recyclingwasserspeicher hinsichtlich ihrer Volumina unterschiedlich groß einstellbar. Dies ist besonders vorteilhaft, da erfahrungsgemäß der Abwasserspeicher und der Recyclingwasserspeicher zur gleichen Zeit nicht vollständig mit Abwasser beziehungsweise mit Recyclingwasser gefüllt sind. Durch die flexible Hülle der Speicher ist es möglich, den mobilen Speichercontainer maximal mit zu reinigendem Abwasser oder maximal mit bereits recyceltem Abwasser zu füllen.

Hierdurch kann der mobile Speichercontainer besonders platzsparend konstruiert werden.

Eine besonders bevorzugte Ausführungsvariante hinsichtlich des Abwasserspeichers beziehungsweise des Recyclingwasserspeichers sieht vor, dass der Abwasserspeicher und der Recyclingwasserspeicher aus flexiblen Schläuchen hergestellt sind. Flexible Schläuche eignen sich besonders gut, baulich einfache Speicher mit flexiblen Hüllen bereit zu stellen. Die Schläuche sind hierbei derart dimensioniert, dass eine vollständige Ausdehnung zur jeweils der Befestigung des Schlauches gegenüberliegenden Seite möglich ist. Beispielsweise ist der Recyclingwasserspeicher am Montagmorgen mit nutzbarem Recyclingwasser zum Start eines Wäschereibetriebes komplett gefüllt. Am Freitagabend ist der Abwasserspeicher dann mit aufzubereitenden Abwasser gefüllt, welches dann den Reinigungseinrichtungen der Aufbereitungsvorrichtung über das Wochenende bereit gestellt wird.

Vorteilhafter Weise nimmt ein gefüllter Abwasserspeicher mehr als 70 %, vorzugsweise mehr als 80 %, eines Speichercontainervolumens ein.

Dahingehend nimmt ein entleerter Abwasserspeicher vorteilhafter Weise weniger als 30 %, vorzugsweise weniger als 20 %, eines Speichercontainervolumens ein.

Gleiches gilt für den Recyclingwasserspeicher. Vorzugsweise nimmt ein gefüllter Recyclingwasserspeicher mehr als 70 %, vorzugsweise mehr als 80 %, eines Speichercontainervolumen ein.

Entsprechend nimmt ein entleerter Recyclingwasserspeicher weniger als 30 %, vorzugsweise weniger als 20 %, eines Speichercontainervolumens ein.

Um dem Abwasserspeicher ein Abwasser zur Zwischenspeicherung zuzuführen und nach der Zwischenspeicherung wieder entnehmen zu können, ist es vorteilhaft, wenn der Abwasserspeicher einen Abwasserzulauf und einen Abwasserablauf aufweist. Mittels des Abwasserzulaufes wird ein zu reinigendes Abwasser zugeführt. Mittels des Abwasserablauf wird das zu reinigende Abwasser beispielsweise einem Bio-Reaktor der in einem mobilen Container angeordneten biologischen Aufbereitungsvorrichtung zugeführt.

Sowohl der Abwasserzulauf als auch der Abwasserablauf sind vorteilhaft an einer gemeinsamen Containerseitenwand angeordnet, da hierdurch die Schnittstellen zu einem Abwasserspeicher mit einer flexiblen Hülle räumlich auf einen bestimmten Bereich des Abwasserspeichers eingegrenzt ist, sodass umliegende Bereiche des Abwasserspeichers sich nahezu ungehindert flexibel in dem mobilen Speichercontainer bewegen können.

Entsprechend ist es vorteilhaft, wenn der Recyclingwasserspeicher einen Recyclingwasserzulauf und einen Recyclingwasserablauf aufweist. Mittels des Recyclingwasserzulaufs wird recyceltes Abwasser in den Recyclingwasserspeicher eingespeist, während das recycelte Abwasser mittels des Recyclingwasserablaufs wieder für einen weiteren Waschprozess bereit gestellt wird.

Die Flexibilität des Recyclingwasserspeichers ist, wenn überhaupt, nur sehr gering beeinflusst, wenn sowohl der Recyclingwasserzulauf als auch der Recyclingwasserablauf an einer gemeinsamen Containerseitenwand angeordnet sind. Neben der kompakten Bauweise ist auch eine optimale Befüllung und Entleerung des Recyclingwasserspeichers möglich, wie dies bereits bei dem Abwasserspeicher erzielt ist.

Der Abwasserspeicher kann sich innerhalb des mobilen Speichercontainers besonders gut entfalten, wenn der Abwasserspeicher an zwei Containerseitenwänden befestigt ist. Konstruktiv vorteilhaft ist es, wenn als erste Befestigungsseite die Containerseitenwand gewählt wird, an welcher der Abwasserzulauf und der Abwasserablauf vorgesehen sind, da der Abwasserspeicher dort bereits eine gewisse Zwangslage erfährt. Als zweite Befestigungsseite hat sich vorteilhafter Weise die Unterseite des mobilen Speichercontainers herauskristallisiert, da sich der Abwasserspeicher beim Befüllen von den so vorgesehenen Befestigungswänden optimal in den Raum des mobilen Speichercontainers entfaltet und dabei zusätzlich gegebenenfalls das Recyclingwasser aus dem Recyclingwasserspeicher herausdrücken kann.

Dementsprechend ist es vorteilhaft, wenn auch der Recyclingwasserspeicher an zwei Containerseitenwänden befestigt ist, wobei bevorzugt eine erste Befestigungsseitenwand die Containerseitenwand mit dem Recyclingwasserzulauf und dem Recyclingwasserablauf ist. Die zweite Befestigungsseitenwand ist die Oberseite des Containers. Durch diese gewählten Befestigungsseitenwände kann sich der Recyclingwasserspeicher ebenfalls optimal in den Raum des mobilen Speichercontainers ausbreiten beziehungsweise entfalten.

Es versteht sich, dass bei einer anderen Ausführungsvariante der Abwasserspeicher an der Oberseite und der Recyclingwasserspeicher entsprechend an der Unterseite des Speichercontainers befestigt sein kann. Verständlicher Weise sind hierbei die beiden Wasserspeicher zusätzlich jeweils an einer weiteren Containerseitenwand befestigt, um optimal innerhalb des Speichercontainers befestigt zu sein.

In diesem Zusammenhang sieht eine bevorzugte Ausführungsvariante vor, dass der Abwasserspeicher und der Recyclingwasserspeicher an unterschiedlichen Containerseitenwänden befestigt sind. Somit behindern sich die beiden Speicher beim Entfalten und Zusammenziehen nicht.

Es versteht sich, dass die Merkmale hinsichtlich des Abwasserspeichers und des Recyclingwasserspeichers, insbesondere in Bezug auf ihre flexible Hülle, unabhängig von den übrigen Merkmalen der Erfindung vorteilhaft sind, da hierdurch weitere noch nicht erzielte Vorteile im Zusammenhang mit einer biologischen Aufbereitungsvorrichtung von Abwässern erzielt werden.

Mittels der vorgestellten Aufbereitungsvorrichtung werden die benötigten Frisch- und Abwassermengen um ca. 60 % bis 70 % reduziert. Die Größe des Abwasserspeichers entspricht vorteilhafter Weise einem Wasserverbrauch, der dreiviertel der täglichen Verarbeitungskapazität der biologischen Aufbereitungsvorrichtung beträgt.

Besonders platzsparend können die beiden mobilen "Teilcontainer" aufeinander gelagert werden, wobei der mobile Speichercontainer vorzugsweise auf den mobilen Verfahrenscontainer abgesetzt wird.

Die Aufgabe der Erfindung wird auch von einem Verfahren zum biologischen Aufbereiten von Abwasser gelöst, bei welchem das Abwasser zum Aufbereiten wenigstens einem Bio-Reaktor zugeführt wird, und das Abwasser einen ersten Bio-Reaktor mit einer von einer laminaren Strömung verschiedenen Hauptströmung und zusätzlich wenigstens einen weiteren Bio-Reaktor mit einer laminaren Hauptströmung durchströmt. Dadurch, dass das Abwasser den ersten Bio-Reaktor mit einer von einer laminaren Strömung verschiedenen Hauptströmung durchströmt, wird das Abwasser besonders gut mit Luftsauerstoff angereichert. Bei dem Durchströmen des weiteren Bio-Reaktors mit einer laminaren Hauptströmung verbleibt das zu reinigende Abwasser genügend lang in dem weiteren Bio-Reaktor, um von entsprechenden Bakterienkulturen weiter aufbereitet zu werden.

Besonders vorteilhaft ist es, wenn das Abwasser mehr als zwei Bio-Reaktoren hintereinander durchströmt. Insbesondere hat sich herauskristallisiert, dass es vorteilhaft ist, wenn das Abwasser mehr als zwei parallel geschaltete Linien von zwei in Reihe geschalteten Bio-Reaktoren durchströmt, da in jedem Bio-Reaktor spezielle Verfahrensbedingungen einstellbar sind, die von anderen Verfahrensbedingungen eines weiteren Bio-Reaktors verschieden sind. Somit ergänzen sich verschiedene Verfahrensbedingungen zu einem Aufbereitungsprozess, der ein optimal aufbereitetes Recyclingwasser garantiert.

Darüber hinaus bieten mehrere, insbesondere hintereinander geschaltete, Bio-Reaktor-Linien eine Raumgestaltung, die wesentlich variabler ausgelegt werden kann, als dies bei einem oder nur zwei Bio-Reaktoren der Fall ist.

Es ist weiter vorteilhaft, wenn das Abwasser vor dem Aufbereiten einem ersten Zwischenspeicher, wie einem Abwasserspeicher, und nach den Aufbereiten einem weiteren Zwischenspeicher, wie einem Recyclingwasserspeicher, zugeführt wird. In dem ersten Zwischenspeicher wird das Abwasser, welches aufzubereiten ist, gesammelt und für das Aufbereiten mit den Bio-Reaktoren bereit gestellt. Durch den Abwasserspeicher besteht die Möglichkeit, dass sich die Aufbereitungsgeschwindigkeit des aufzubereitenden Abwassers nicht nach dem Onlinewasserverbrauch einer Wäscherei richtet, sondern so eingestellt wird, dass das Abwasser die Bio-Reaktoren für den Aufbereitungsprozess optimal durchströmt. Somit ist eine hohe Qualität des Recyclingwassers unabhängig von einem tatsächlichen Verbrauch, beispielsweise in einer Wäscherei, gleichbleibend gewährleistet.

Hat das Abwasser den Aufbereitungszyklus durchlaufen, wird es als Recyclingwasser in einem weiteren Zwischenspeicher bereit gestellt und ist individuell, etwa nach den Bedürfnissen eines Wäschereibetriebs, abrufbar.

Dadurch dass das zu reinigende Abwasser während des Aufbereitens von einem Verbraucher, beispielsweise von dem Durchfluss des Prozesswassers einer Wäscherei, entkoppelt ist, ist es möglich, das Abwasser optimiert auf die Leistungsfähigkeit der Bio-Reaktoren zu reinigen und diese entsprechend mit zu reinigendem Abwasser durchströmen zu lassen. Hierdurch wird die Recyclingwasserqualität wesentlich verbessert.

Eine Verfahrensvariante sieht vor, dass ein Speichercontainervolumen eines mobilen Speichercontainers von einem Abwasserspeicher und von einem Recyclingwasserspeicher abwechselnd mehr als 50 % ausgefüllt wird. Hierdurch ist es gelungen, Bauraum an einer zum Durchführen des Verfahrens vorgesehenen Vorrichtung einzusparen, da dieser Bauraum entweder von einem Abwasserspeicher oder von einem Recyclingwasserspeicher genutzt und hierbei Idealerweise nahezu vollständig ausgefüllt wird.

Weitere Vorteile, Ziele und Eigenschaften vorliegender Erfindung werden anhand der Beschreibung anliegender Zeichnung erläutert, in welcher beispielhaft eine biologische Aufbereitungsvorrichtung und deren Bauteilgruppen in mobilen Containern dargestellt sind.

Es zeigt
- Figur 1: schematisch eine Ansicht zweier aufeinander gestapelter mobiler Container einer biologischen Abwasseraufbereitungsvorrichtung,
- Figur 2: schematisch eine Ansicht eines Bio-Reaktors mit einem optimierten Höhe-Durchmesser-Verhältnis,
- Figur 3: schematisch eine Ansicht eines Verfahrenscontainers und eines darauf abgesetzten Speichercontainers,
- Figur 4: schematisch eine Ansicht eines weiteren Speichercontainers mit einem flexiblen Abwasserspeicher und einem flexiblen Recyclingwasserspeicher,
- Figur 5: schematisch eine Ansicht des weiteren Speichercontainers aus der Figur 4 mit einem gefüllten Abwasserspeicher,
- Figur 6: schematisch eine Ansicht des weiteren Speichercontainers aus den Figuren 4 und 5 mit einem gefüllten Recyclingwasserspeicher und
- Figur 7: schematisch einen Aufbau einer biologischen Aufbereitungsvorrichtung zum dauerhaften Anordnen in mobilen Containern.

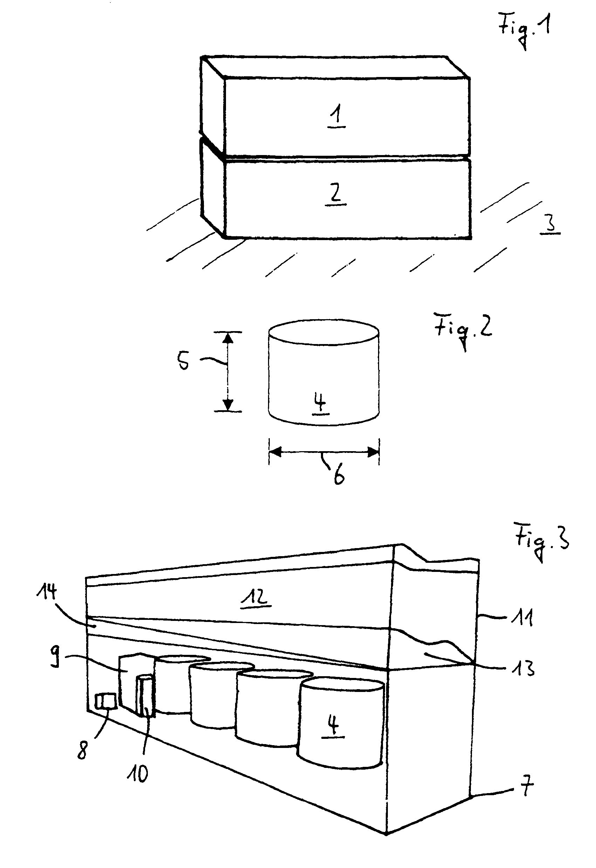

In der Darstellung nach der Figur 1 ist das Aufbauprinzip vorliegender biologischer Aufbereitungsvorrichtung gezeigt, bei welchem ein erster mobiler Container 1 und ein zweiter mobiler Container 2 Bauteilgruppen (hier nicht dargestellt) der biologischen Aufbereitungsvorrichtung beinhalten. Der mobile Container 1 ist bei diesem Ausführungsbeispiel auf den zweiten mobilen Container 2 aufgesetzt, wobei der mobile Container 2 auf einem Untergrund 3 abgesetzt ist.

Durch die mobilen Container 1 und 2 ist die biologische Aufbereitungsvorrichtung einfach und schnell an nahezu jedem beliebigen Ort aufstellbar und einsatzbereit.

Der in der Figur 2 gezeigte Bio-Reaktor 4 kennzeichnet sich dadurch aus, dass seine Höhe 5 und sein Durchmesser 6 in einem Höhe-Durchmesser-Verhältnis stehen, welches kleiner gleich 1 ist. Durch diese eher etwas gedrungene Gestalt eignet sich der Bio-Reaktor 4 im Gegensatz zu herkömmlichen Reaktoren gut dazu, in einem der mobilen Container 1 oder 2 angeordnet zu werden.

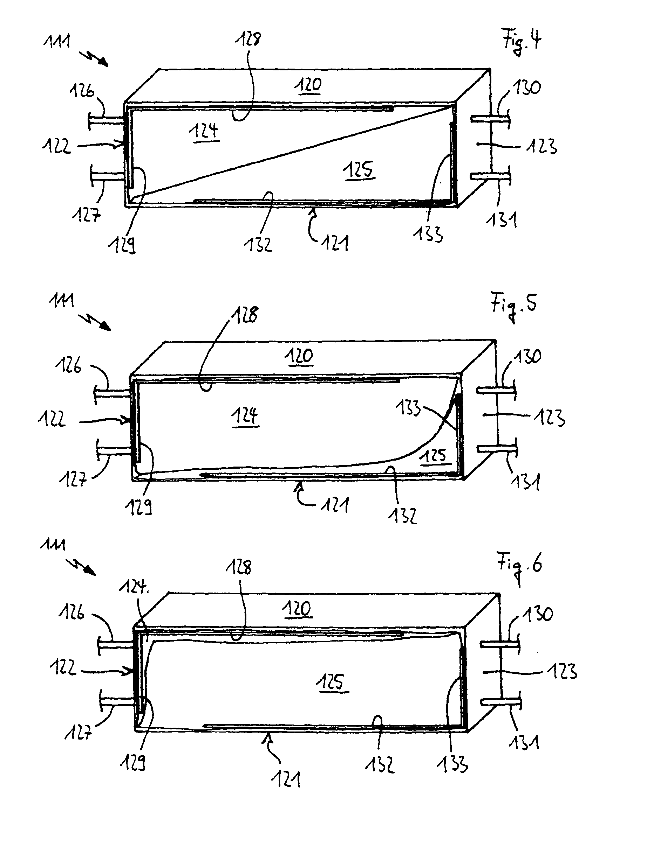

Wie aus dem Ausführungsbeispiel der Figur 3 ersichtlich, sind in einem mobilen Verfahrenscontainer 7 gleich vier solcher Bio-Reaktoren 4 (hier nur exemplarisch beziffert) angeordnet. Jeweils zwei Bio-Reaktoren 4 innerhalb des Verfahrenscontainers 7 sind in Reihe geschaltet, so dass zwei parallel betriebene Bio-Reaktor-Linien in dem Verfahrenscontainer angeordnet sind. Darüber hinaus sind in dem Verfahrenscontainer 7 eine Pumpe 8, ein Kiesfilter 9 und eine Ozoniereinrichtung 10 vorgesehen. Die in der Figur 3 gezeigte biologische Aufbereitungsvorrichtung verfügt über eine Aufbereitungskapazität von maximal 65 m³ pro Tag. Das Volumen eines jeden Bio-Reaktors 4 beträgt in diesem Ausführungsbeispiel 5 m³. Die Verweilzeit innerhalb dieser biologischen Aufbereitungsvorrichtung beträgt 4 bis 6 Stunden. Bei der Aufbereitung wird adaptierte Biomasse eingesetzt, wobei ein Luftbedarf von ca. 3 m³ je 1 m³ Wasser erforderlich ist. Die Wassertemperatur beträgt vorliegend zwischen 15 °C und 38 °C, wobei der Energiebedarf weniger als 7 kWh/m³ Wasser beträgt. Der Schlammanfall beläuft sich auf ca. 50 kg TS/a m³ Volumen.

Oberhalb des Verfahrenscontainers 7 ist ein mobiler Speichercontainer 11 angeordnet. Der mobile Speichercontainer 11 umfasst ein Volumen 12, in welchem ein Abwasserspeicher 13 und ein Recyclingwasserspeicher 14 vorgesehen sind. In diesem Ausführungsbeispiel ist der Abwasserspeicher 13 oberhalb des Recyclingwasserspeichers 14 angeordnet. Diese Anordnung kann bei Bedarf auch umgekehrt vorgesehen sein.

Der in den Figuren 4 bis 6 gezeigte mobile Speichercontainer 111 weist in Wesentlichen einen geschlossenen Container mit einer Oberseite 120, einer Unterseite 121, einer ersten Kopfseite 122 und einer zweiten Kopfseite 123 auf.

In dem mobilen Speichercontainer 111 sind ein Abwasserspeicherschlauch 124 und ein Recyclingwasserspeicherschlauch 125 vorgesehen. Der Abwasserspeicherschlauch 124 dient dazu aufzubereitendes Abwasser aufzunehmen, während der Recyclingwasserspeicherschlauch 125 dazu vorgesehen ist, bereits aufbereitetes Abwasser zu speichern und für einen weiteren Wachprozess bereit zu stellen. Sowohl der flexible Abwasserspeicherschlauch 124 als auch der flexible Recyclingwasserspeicherschlauch 125 sind derart ausgebildet, dass sie ihr Volumen je nach Befüllungsgrad variieren können. Auch in diesem Ausführungsbeispiel ist der Abwasserspeicherschlauch 124 oberhalb des Recyclingspeicherschlauchs 125 angeordnet. Dies ist aber nicht zwingend erforderlich. Vielmehr könnten der Abwasserspeicherschlauch 124 und der Recyclingspeicherschlauch 125 auch umgekehrt angeordnet sein, wenn dies bei einem Anwendungsfall vorteilhaft sein sollte.

Gemäß der Darstellung nach Figur 4 sind der Abwasserspeicherschlauch 124 und der Recyclingwasserspeicherschlauch 125 im Wesentlichen zu gleichen Teilen gefüllt, sodass der Abwasserspeicherschlauch 124 und der Recyclingwasserspeicherschlauch 125 in etwa zu gleichen Teilen den mobilen Speichercontainer 111 ausfüllen.

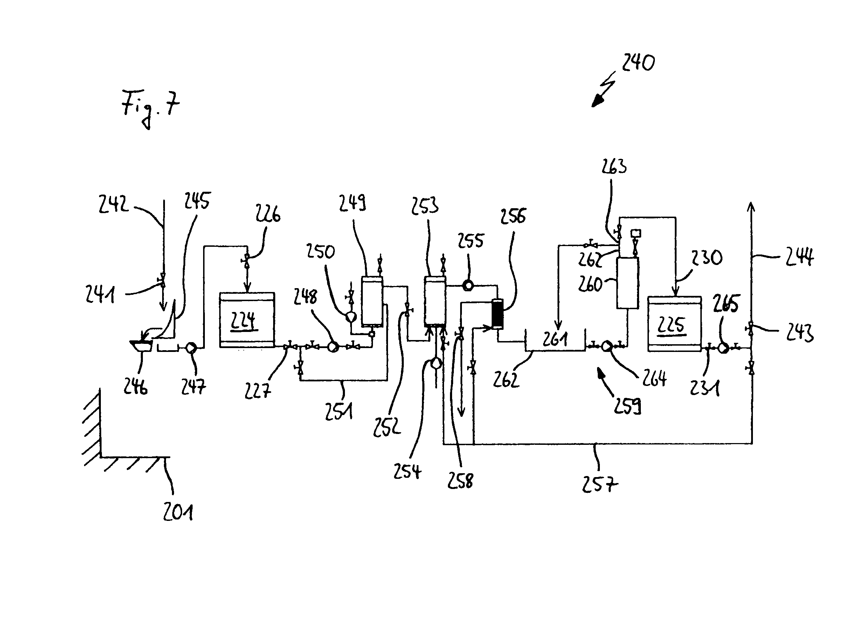

Nach der Figur 5 hat sich dieses Verhältnis verschoben, wobei nun wesentlich mehr Abwasser in dem flexiblen Abwasserspeicherschlauch 124 als Recyclingwasser in dem Recyclingwasserspeicherschlauch 125 vorliegt. Dementsprechend ist der Abwasserspeicherschlauch 124 expandiert, wohin gegen das Volumen des Recyclingwasserspeicherschlauches 125 entsprechend abgenommen hat.

Gemäß der Darstellung nach Figur 6 ist dieses Verhältnis umgekehrt. Hier füllt der Recyclingwasserspeicherschlauch 125 nahezu den gesamten mobilen Speichercontainer 111 aus, sodass entsprechend der Abwasserspeicherschlauch 124 nur noch einen Bruchteil des mobilen Speichercontainervolumens einnimmt.

Der flexible Abwasserspeicherschlauch 124 ist beispielsweise nach einem Arbeitstag oder nach einer Arbeitswoche gefüllt, je nachdem wie groß der mobile Speichercontainer 111 ausgelegt ist. Der flexible Recyclingwasserspeicherschlauch 125 ist hingegen erst stark gefüllt, wenn das zuvor verschmutzte Abwasser bereits aufbereitet wurde, beispielsweise am Morgen oder am Wochenbeginn, und das aufbereitete Abwasser zur Wiederverwendung in den Recyclingwasserspeicherschlauch 125 gefüllt wurde.

Um den flexiblen Abwasserspeicherschlauch 124 optimal zu füllen beziehungsweise zu entleeren, sind ein Abwasserzulauf 126 und ein Abwasserablauf 127 gemeinsam an der ersten Kopfseite 122 angeordnet. Damit sich der flexible Abwasserspeicherschlauch 124 innerhalb des mobilen Speichercontainers 111 optimal ausbreiten beziehungsweise zurückziehen kann, ist der flexible Abwasserspeicherschlauch 124 an der Oberseite 120 des mobilen Speichercontainers 111 mittels eines Oberseitenbefestigungsmittels 128 und an der ersten Kopfseite 122 des mobilen Speichercontainers 111 mittels eines ersten Kopfseitenbefestigungsmittels 129 befestigt, sodass sich der flexible Abwasserspeicherschlauch 124 besonders günstig innerhalb des mobilen Speichercontainers 111 ausbreiten kann.

Um den flexiblen Recyclingwasserspeicherschlauch 125 befüllen beziehungsweise entleeren zu können, sind dessen Recyclingwasserzulauf 130 und dessen Recyclingwasserablauf 131 gemeinsam an der zweiten Kopfseite 123 des mobilen Speichercontainers 111 vorgesehen.

Damit sich auch der flexible Recyclingwasserspeicherschlauch 125 problemlos innerhalb des mobilen Speichercontainers 111 ausbreiten beziehungsweise zurückziehen kann, ist der flexible Recyclingwasserspeicherschlauch an der Unterseite 121 mit einem Unterseitenbefestigungsmittel 132 und an der zweiten Kopfseite 123 mit einem zweiten Kopfseitenbefestigungsmittel 133 innerhalb des mobilen Speichercontainers 111 befestigt.

Die in der Figur 7 gezeigte biologische Aufbereitungsvorrichtung 240 ist in einem mobilen Container 201 angeordnet. Hierbei steht die biologische Aufbereitungsvorrichtung 240 über ein Zuführventil 241 mit einem Wäschereibetriebabwasserablauf 242 und über ein Abfuhrventil 243 mit einem Wäschereibetriebrecyclingwasserzulauf 244 in Kontakt.

Das Abwasser aus der Wäscherei (hier nicht gezeigt) wird zunächst von Flusen und anderen Feststoffen befreit, indem es einem Flusensieb 245 zugeführt wird. Die ausgesiebten Feststoffe bzw. Flusen werden einem dafür vorgesehenen Aufnahmebehälter 246 zugeführt und damit aus dem Aufbereitungsprozess herausgenommen.

Das so von Flusen und Feststoffen gereinigte Abwasser wird mittels einer Pumpe 247 über einen Abwasserzulauf 226 einem Abwasserspeicher 224 zugeführt. Das Abwasser wird gegebenenfalls mit dem Wasser vorheriger Waschgänge gemischt, um somit Schwankungen in der Eingangsqualität des Abwassers auszugleichen. Die Größe des flexiblen Abwasserspeichers 224 entspricht ungefähr dreiviertel der täglichen Verarbeitungskapazität der biologischen Aufbereitungsvorrichtung 240.

Über einen Abwasserablauf 227 gelangt das so bereitgestellte Abwasser mittels einer ersten Bio-Reaktorpumpe 248 zu einem ersten Bio-Reaktor 249. Mittels eines Injektors 250 wird dem Abwasser vor dem Erreichen des ersten Bio-Reaktors 249 Umgebungsluft in feinster Form hinzudosiert. Hierdurch erhöht sich die Reaktionsfähigkeit des Abwassers mit Bakterienkulturen, die sich in dem ersten Bio-Reaktor 249 befinden. Im ersten Bio-Reaktor 249 erfolgt ein erhöhter Abbau an organischen Bestandteilen aus dem Abwasser. Um eine Verschlammung durch inaktives Bakterienmaterial zu verhindern, ist eine Rückführung eines Teilstroms aus dem Reaktor über eine Teilstromrückführeinrichtung 251 vorgesehen.

Das nicht zurückgeführte Abwasser gelangt über eine Verbindungsleitung 252 zu einem weiteren Bio-Reaktor 253. In dem zweiten Bio-Reaktor 253 erfolgt der Abbau eines Teils der im ersten Bio-Reaktor 249 gebildeten und übergeströmten Bioflocken sowie der restliche Abbau organischer Bestandteile. Hierzu herrscht in dem zweiten Bio-Reaktor 253 eine laminar ausgebildete Strömung und der zweite Bio-Reaktor 253 wird vorzugsweise anaerob betrieben.

Die beiden Bio-Reaktoren 249 und 253 sind in verschiedenen Ebenen teilweise mit Füllkörpern (hier nicht dargestellt) gefüllt, an denen sich die entsprechenden Bakterienkulturen entwickeln können.

Dem zweiten Bio-Reaktor 253 kann bei Bedarf ebenfalls mittels eines weiteren Injektors 254 ebenfalls Umgebungsluft zugeführt werden. Das Abwasser, welches den zweiten Bio-Reaktor 253 verlässt, wird mittels einer Kiesfilterpumpe 255 einem Kiesfilter 256 zugeführt.

Insbesondere durch die biologischen Prozesse, welche in den beiden Bio-Reaktoren 249 und 253 ablaufen, ist entsprechend Biomasse aufgebaut worden, die in zumindest einem weiteren nachgeschalteten Prozess abgeschieden beziehungsweise herausgefiltert werden muss.

Hierzu wird ein Kiesfilter 256 verwendet, der zu seiner Reinigung rückgespült werden kann. Zum Rückspülen wird in definierten Abständen bereits gereinigtes Abwasser eingesetzt, wobei der Kiesfilter 256 in entgegengesetzter Richtung zum Normalbetrieb durchströmt wird. Beim Rückspülen gelangt bereits gereinigtes Abwasser über eine Rückspülleitung 257 in den Kiesfilter 256. Durch den Rückspülvorgang losgelöste Verschmutzungen des Kiesfilters 256 werden über eine Aussonderungsleitung 258 aus dem Aufbereitungsprozess genommen.

Diese Rückspülvorgänge sind vorliegend der Hauptgrund dafür, dass bei dem vorliegenden biologischen Aufbereitungsverfahren nicht 100 % des Abwassers als Recyclingwasser zurückgewonnen wird.

Dem Kiesfilter 256 ist eine Ozoniereinrichtung 259 nachgeschaltet. Bei der Ozonierung wird dem Abwasser in einem Ozonierbehälter 260 Ozon O₃ zugegeben. Das Ozon O₃ wird mittels eines speziellen Gerätes (hier nicht gezeigt) aus der Umgebungsluft gewonnen und hat eine sehr stark oxidierende Wirkung. Die Ozonierung verringert die Keimzahl im Abwasser und sorgt außerdem für eine entsprechende Entfärbung des Abwassers im Falle der Färbung durch spezielle Wäschechargen.

Im Bedarfsfall kann mittels des Ozonierbehälters 260 auch noch Hypochlorid beigefügt werden, um eine weitere Keimzahlreduzierung zu erzielen.

Die Ozoniereinrichtung 259 umfasst neben dem Ozonierbehälter 260 eine Ozoniervorlage 261, die über eine Ozonierleitung 262 mit dem Ausgang 263 des Ozonierbehälters 260 in Kontakt steht. Darüber hinaus umfasst die Ozoniereinrichtung 259 eine Ozoniereinrichtungspumpe 264, um das Abwasser durch den Ozonierbehälter 260 zu befördern. Vom Ausgang 264 des Ozonierbehälters 260 gelangt das Recyclingwasser in einen flexiblen Recyclingwasserspeicher 225, an welchem es zur Weiterverwendung bereit gestellt wird. Über einen Recyclingwasserablauf 231 gelangt das Recyclingwasser mittels einer Recyclingwasserpumpe 265 entweder in die Rückspülleitung 257 oder in den Wäschereibetriebrecyclingwasserzulauf 244.

### Bezugsziffernliste:

- 1: erster mobiler Container
- 2: zweiter mobiler Container
- 3: Untergrund
- 4: Bio-Reaktor
- 5: Höhe
- 6: Durchmesser
- 7: mobiler Verfahrenscontainer
- 8: Pumpe
- 9: Kiesfilter
- 10: Ozoniereinrichtung
- 11: mobiler Speichercontainer
- 12: Volumen des mobilen Speichercontainers
- 13: Abwasserspeicher
- 14: Recyclingwasserspeicher
- 111: mobiler Speichercontainer
- 120: Oberseite
- 121: Unterseite
- 122: erste Kopfseite
- 123: zweite Kopfseite
- 124: Abwasserspeicherschlauch
- 125: Recyclingwasserspeicherschlauch
- 126: Abwasserzulauf
- 127: Abwasserablauf
- 128: Oberseitenbefestigungsmittel
- 129: erstes Kopfseitenbefestigungsmittel
- 130: Recyclingwasserzulauf
- 131: Recyclingwasserablauf
- 132: Unterseitenbefestigungsmittel
- 133: zweites Kopfseitenbefestigungsmittel
- 201: mobiler Container
- 224: Abwasserspeicher
- 225: Recyclingwasserspeicher
- 226: Abwasserzulauf
- 227: Abwasserablauf
- 231: Recyclingwasserablauf
- 240: Aufbereitungsvorrichtung
- 241: Zuführventil
- 242: Wäschereibetriebabwasserablauf
- 243: Abfuhrventil
- 244: Wäschereibetriebrecyclingwasserzulauf
- 245: Flusensieb
- 246: Aufnahmebehälter
- 247: Pumpe
- 248: erste Bio-Reaktorpumpe
- 249: erster Bio-Reaktor
- 250: Injektor des ersten Bio-Reaktors
- 251: Teilstromrückführeinrichtung
- 252: Verbindungsleitung
- 253: zweiter Bio-Reaktor
- 254: Injektor des zweiten Bio-Reaktors
- 255: Kiesfilterpumpe
- 256: Kiesfilter
- 257: Rückspülleitung
- 258: Aussonderungsleitung
- 259: Ozoniereinrichtung
- 260: Ozonierbehälter
- 261: Ozoniervorlage
- 262: Ozonierleitung
- 263: Ausgang
- 264: Ozoniereinrichtungspumpe
- 265: Recyclingwasserpumpe

## Patentansprüche

1. Vorrichtung zum biologischen Aufbereiten von Abwasser mit wenigstens einem Abwasserzulauf zum Einleiten des Abwassers in die Aufbereitungsvorrichtung und mit wenigstens einem Recyclingwasserablauf zum Bereitstellen des Recyclingwassers an der Aufbereitungsvorrichtung, ***dadurch gekennzeichnet, dass*** die Aufbereitungsvorrichtung dauerhaft in wenigstens einem mobilen Container angeordnet ist.

2. Aufbereitungsvorrichtung nach Anspruch 1, ***gekennzeichnet durch*** einen mobilen Verfahrenscontainer (7), in welchem technische Reinigungseinrichtungen, wie etwa Bio-Reaktoren (4), angeordnet sind.

3. Aufbereitungsvorrichtung nach einem der Ansprüche 1 oder 2, ***gekennzeichnet durch*** wenigstens einen Bio-Reaktor (4) mit einem Verhältnis Höhe zu Durchmesser kleiner gleich 1.

4. Aufbereitungsvorrichtung nach einem der Ansprüche 1 bis 3, ***dadurch gekennzeichnet, dass*** die Bio-Reaktoren (4) ein Volumen von mindestens 4 m³, vorzugsweise von mindestens 5 m³, aufweisen.

5. Aufbereitungsvorrichtung nach einem der Ansprüche 1 bis 4, ***dadurch gekennzeichnet, dass*** in dem mobilen Verfahrenscontainer 7 mehr als ein Bio-Reaktor (4), vorzugsweise vier oder mehr Bio-Reaktoren (4), angeordnet sind.

6. Aufbereitungsvorrichtung nach einem der Ansprüche 1 bis 5, ***dadurch gekennzeichnet, dass*** mehr als zwei parallel geschaltete Linien von zwei in Reihe geschalteten Bio-Reaktoren (4) in dem Verfahrenscontainer (7) angeordnet sind.

7. Aufbereitungsvorrichtung nach einem der Ansprüche 1 bis 6, ***gekennzeichnet durch*** einen mobilen Speichercontainer (11), in welchem ein Abwasserspeicher (13) und/oder ein Recyclingwasserspeicher (14) angeordnet sind.

8. Aufbereitungsvorrichtung nach Anspruch 7, ***dadurch gekennzeichnet, dass*** der Abwasserspeicher (13) und/oder der Recyclingwasserspeicher (14) eine flexible Hülle aufweisen.

9. Aufbereitungsvorrichtung nach einem der Ansprüche 1 bis 8, ***dadurch gekennzeichnet, dass*** ein gefüllter Abwasserspeicher (13) und/oder Recyclingwasserspeicher (14) mehr als 70 %, vorzugsweise mehr als 80 %, eines Speichercontainervolumens einnimmt.

10. Aufbereitungsvorrichtung nach einem der Ansprüche 1 bis 9, ***dadurch gekennzeichnet, dass*** ein entleerter Abwasserspeicher (13) und/oder Recyclingwasserspeicher (14) weniger als 30 %, vorzugsweise weniger als 20 %, eines Speichercontainervolumens einnimmt.

11. Aufbereitungsvorrichtung nach einem der Ansprüche 1 bis 10, ***dadurch gekennzeichnet, dass*** ein Abwasserspeicher (13) einen Abwasserzulauf (126) und einen Abwasserablauf (127) aufweist und sowohl der Abwasserzulauf (126) als auch der Abwasserablauf (127) an einer gemeinsamen Containerseitenwand (122) angeordnet sind.

12. Aufbereitungsvorrichtung nach einem der Ansprüche 1 bis 11, ***dadurch gekennzeichnet, dass*** ein Recyclingwasserspeicher (14) einen Recyclingwasserzulauf (130) und einen Recyclingwasserablauf (131) aufweist und sowohl der Recyclingwasserzulauf (130) als auch der Recyclingwasserablauf (131) an einer gemeinsamen Containerseitenwand (123) angeordnet sind.

13. Aufbereitungsvorrichtung nach einem der Ansprüche 1 bis 12, ***dadurch gekennzeichnet, dass*** ein Abwasserspeicher (13) und Recyclingwasserspeicher (14) jeweils an zwei Containerseitenwänden (120, 122) befestigt sind, und die beiden Containerseitenwände (12, 122), an welchen der Abwasserspeicher (13) befestigt ist, und die beiden Containerseitenwände (12, 122), an welchen der Recyclingwasserspeicher (14) befestigt ist, sich vorzugsweise gegenüberliegen

14. Verfahren zum biologischen Aufbereiten von Abwasser, bei welchem das Abwasser zum Aufbereiten wenigstens einem Bio-Reaktor zugeführt wird, ***dadurch gekennzeichnet, dass*** das Abwasser einen ersten Bio-Reaktor mit einer von einer laminaren Strömung verschiedenen Hauptströmung und zusätzlich wenigstens einen weiteren Bio-Reaktor mit einer Jaminaren Hauptströmung durchströmt.

15. Aufbereitungsverfahren nach Anspruch 14, ***dadurch gekennzeichnet, dass*** das Abwasser vor dem Aufbereiten einem ersten Zwischenspeicher, wie einen Abwasserspeicher (13), und nach dem Aufbereiten einem weiteren Zwischenspeicher, wie einen Recyclingwasserspeicher (14), zugeführt wird.

16. Aufbereitungsverfahren nach einem der Ansprüche 14 und 15, ***dadurch gekennzeichnet, dass*** ein Speichercontainervolumen (12) eines mobilen Speichercontainers (11) von einem Abwasserspeicher (13) und von einem Recyclingwasserspeicher (14) abwechselnd mehr als 50 % ausgefüllt wird.
